**Europäisches Patentamt**

**European Patent Office**

**Office européen des brevets**

(11) Veröffentlichungsnummer: **0 344 432 B1**

# EUROPÄISCHE PATENTSCHRIFT

(45) Veröffentlichungstag der Patentschrift:
**27.12.91 Patentblatt 91/52**

(51) Int. Cl.⁵: **B60K 26/04, F02D 11/06**

(21) Anmeldenummer: **89106248.1**

(22) Anmeldetag: **08.04.89**

---

(54) **Koppeleinrichtung für einen Geschwindigkeitsregler.**

---

(30) Priorität: **30.05.88 DE 3818310**

(43) Veröffentlichungstag der Anmeldung:
**06.12.89 Patentblatt 89/49**

(45) Bekanntmachung des Hinweises auf die
Patenterteilung:
**27.12.91 Patentblatt 91/52**

(84) Benannte Vertragsstaaten:
**ES FR GB IT SE**

(56) Entgegenhaltungen:
**DE-A- 2 512 138**
**DE-U- 7 735 209**
**US-A- 3 556 245**
**US-A- 4 715 738**

(73) Patentinhaber: **Hella KG Hueck & Co.**
**Rixbecker Strasse 75 Postfach 28 40**
**W-4780 Lippstadt (DE)**

(72) Erfinder: **Diller, Friedhelm**
**Auf der Bitterhorst 3**
**W-4840 Rheda-Wiedenbrück (DE)**

---

## Beschreibung

Die Erfindung betrifft eine Koppeleinrichtung für einen Geschwindigkeitsregler, insbesondere in Kraftfahrzeugen, mit relativ zueinander beweglichen Bauteilen, die kraftschlüssig miteinander koppelbar sind und die einen Stellantrieb des Geschwindigkeitsreglers mit einer Verstelleinrichtung verbinden, die direkt oder indirekt mit einer Drosselklappe verbunden ist.

Eine Koppeleinrichtung dieser Art ist aus dem deutschen Gebrauchsmuster mit der Nummer GM 7735209 bekannt. Eine Koppeleinrichtung zwischen einer Verstelleinrichtung zum Verstellen des Betriebes einer Brennkraftmaschine und einem an eine Regelschaltung angeschlossenen Stellantrieb weist dabei zwei relativ zueinander verschiebbare Bauteile und eine an einem der beiden Bauteile angebrachte Rastvorrichtung auf. Die Rastvorrichtung verfügt über einen Riegel, der mittels eines Elektromagneten in eine an dem anderen der beiden Bauteile angebrachte Einrastmulde einrückbar ist. Das eine Bauteil ist dabei als ein Zylinder ausgelegt, der direkt an dem Gaspedalhebel angebracht sein kann. Das andere Bauteil ist als Kolben ausgebildet, der in dem Zylinder verschiebbar ist. Die Rastvorrichtung ist an der äußeren Umfangswand des Zylinders und die Einrastmulde ist an dem Kolben angeordnet. Der Kolben ist über eine Zahnstange mit dem Stellmotor verbunden. Ist der Geschwindigkeitsregler außer Betrieb, so ist die Verstelleinrichtung von dem Stellantrieb entkoppelt. Wird der Geschwindigkeitsregler eingeschaltet, wird der Riegel von dem Elektromagneten durch eine Öffnung in dem Zylinder auf die Kolbenfläche gedrückt. Der Stellantrieb fährt den Kolben aus der Leerlaufstellung solange dem Zylinder nach bis der Riegel in die Einrastmulde einrückt, was über einen Schalter ermittelt wird. Die Fahrgeschwindigkeit wird somit durch den Geschwindigkeitsregler regelbar. Wird der Geschwindigkeitsregler abgeschaltet, wird der Riegel durch eine Rückholfeder nach dem Abschalten des Elektromagneten aus der Einrastmulde zurückgezogen, wodurch die Fahrgeschwindigkeit wieder durch den Fahrer bestimmbar ist.

Nachteilig erweist sich hierbei, daß der Aufbau durch die Verwendung eines Riegels, der durch einen Elektromagneten einrückbar ist und durch eine Feder rückholbar ist, nicht einfach und kostengünstig ist und daß zudem ein Schalter vorzusehen ist, der die Riegelstellung anzeigen muß.

Weiterhin ist nachteilig, daß bei Einschalten des Geschwindigkeitsreglers der Riegel auf den Kolben drückt und der Stellantrieb den Kolben nachführen muß bis der Riegel in die Einrastmulde einrückt, was zu einer unerwünschten Verzögerung der Wirkung des Geschwindigkeitsreglers führen kann und den Verschleiß der Bauteile erhöht.

Zudem ist nachteilig, daß der Fahrer bei einem erforderlichen Beschleunigungsvorgang erst den Widerstand des Riegels überwinden muß, damit eine Entkopplung der Bauteile erfolgt.

Aus dem deutschen Gebrauchsmuster mit der Nummer GM 7808547 ist eine Koppeleinrichtung bekannt, die über ein pneumatisches Stellelement verfügt, dessen Stellbewegung auf eine Koppelstange übertragen wird. An der dem Stellelement abgewandten Seite der Koppelstange ist eine Anschlußeinrichtung über eine Justiereinrichtung mit der Koppelstange verbindbar. Die Anschlußvorrichtung ist hier als Kugelpfanne ausgebildet.

Nachteilig erweist sich hierbei, daß eine Entkopplung zwischen dem Stellelement und einer an die Anschlußeinrichtung angeschlossene Verstelleinrichtung nicht vorgesehen ist, so daß das Stellelement bei jeder Bewegung der Verstelleinrichtung mit Kraft beaufschlagt wird, wodurch der Kraftaufwand zum Betätigen der Verstelleinrichtung erhöht und der Verschleiß des Verstellelements heraufgesetzt wird. Weiterhin erweist sich als nachteilig, daß die Justiereinrichtung durch ein Gewinde und eine Überwurfmutter aufgebaut ist, wodurch eine feinfühlige genaue und schnelle Justage der Koppeleinrichtung an eine Grundstellung der Verstelleinrichtung nur schwer möglich ist, da durch das Anziehen der Mutter Kraft in die Verstellrichtung erzeugt wird.

Der Erfindung liegt die Aufgabe zugrunde, eine Koppeleinrichtung zu schaffen, die einfach und kostengünstig herstellbar und montierbar ist, die einfach und schnell an eine vorgegebene Verstelleinrichtung anpaßbar ist und die den Stellantrieb ohne zusätzlichen Kraftaufwand von der Verstelleinrichtung entkoppelt, wenn die Verstelleinrichtung manuell betätigt wird.

Die Aufgabe wird erfindungsgemäß dadurch gelöst, daß ein hohlzylinderförmiger Anschlußstutzen fest mit dem Stellantrieb verbunden ist, daß der Anschlußstutzen auf der dem Stellantrieb abgewandten Seite über eine Justiereinrichtung mit einem hohlzylinderförmigen Justierstück verbunden ist, daß das Justierstück auf der dem Stellantrieb abgewandten Seite einen Deckel mit einem Druchbruch aufweist, in dessen einem Abschnitt eine Koppelstange gleitend gelagert ist, daß die Koppelstange an ihrer dem Stellantrieb zugewandten Seite eine Verdickung aufweist, die größer ist als der Abschnitt des Durchbruchs, in dem die Koppelstange gelagert ist und daß die Koppelstange an ihrer dem Stellantrieb abgewandten Seite eine Anschlußeinrichtung aufweist, die die Koppelstange mit der Verstelleinrichtung verbindet.

Vorteilhaft ist es, daß ein hohlzylinderförmiger Anschlußstutzen fest mit dem Stellantrieb verbunden ist, weil somit die Stellbewegung des Stellantriebs sicher auf ein Bauteil der Koppeleinrichtung übertragen wird, in dem durch eine hohlzylinderförmige Ausbildung ein weiteres Bauteil der Koppeleinrichtung frei verschieblich ist.

Weiterhin erweist sich als vorteilhaft, daß der Anschlußstutzen auf der dem Stellantrieb abgewandten Seite über eine Justiereinrichtung mit einem hohlzylinderförmigen Justierstück verbunden ist, weil somit die Gesamtlänge der Koppeleinrichtung einfach, kostengünstig und schnell kraftschlüssig an das Maß anpaßbar ist, daß durch die Verstelleinrichtung und den Stellantrieb vorgegeben ist und durch die Toleranzen der Verstelleinrichtung bestimmt ist. Das Maß ist dabei maßgeblich durch die Leerlaufstellung einer Drosselklappe, die mit der Verstelleinrichtung verbunden ist, vorgegeben.

Dadurch, daß das Justierstück auf der dem Stellantrieb abgewandten Seite einen Deckel mit einem Druchbruch aufweist, in dessen einem Abschnitt eine Koppelstange gleitend gelagert ist, ergibt sich der Vorteil, daß die Koppelstange frei in dem hohlzylinderförmigen Innenraum des Anschlußstutzens und des Justierstücks verschiebbar ist, wodurch auf einfache und kostengünstige Weise, eine Entkopplung zwischen Stellantrieb und Verstelleinrichtung erreicht wird und Platz eingespart wird.

In diesem Zusammenhang ist es vorteilhaft, daß die Koppelstange an ihrer dem Stellantrieb zugewandten Seite eine Verdickung aufweist, die größer ist, als der Abschnitt des Durchbruchs, in dem die Koppelstange gelagert ist, weil somit die Koppelstange auf eine einfache und kostengünstige Weise an den Stellantrieb in eine kraftwirkende Richtung angkoppelbar ist, wenn der Geschwindigkeitsregler in Betrieb gesetzt wird, da in der Leerlaufstellung der Verstelleinrichtung die Justiereinrichtung so justiert ist, daß die Verdickung der Koppelstange kraftschlüssig mit dem Durchbruch des Deckels verbunden ist. Gleichzeitig ist es jederzeit möglich, das Kraftfahrzeug bei eingeschaltetem Geschwindigkeitsregler manuell zu beschleunigen, da die Koppelstange in Richtung auf den Stellantrieb ohne zusätzlichen Kraftaufwand entkoppelbar ist und frei beweglich bleibt.

Vorteilhaft ist es, daß die Koppelstange an ihrer dem Stellantrieb abgewandten Seite eine Anschlußeinrichtung aufweist, die die Koppelstange mit der Verstelleinrichtung verbindet, wodurch eine einfache und kostengünstige Montage der Koppeleinrichtung erreicht wird.

Weitere vorteilhafte Ausgestaltungen und Weiterbildungen des Erfindungsgegenstands ergeben sich aus den Unteransprüchen.

Insbesondere ist es vorteilhaft, daß die Justiereinrichtung durch sich gegenüberliegende Abschnitte auf der Innenseite und durch voneinander weg weisende Abschnitte auf der Außenseite des Anschlußstutzens und des Justierstücks gebildet wird, daß die Abschnitte radial verlaufende sägezahnartig ausgebildete Rippen aufweisen, die sich über einen vorgebenen Bereich parallel zueinander in axialer Richtung erstrecken, daß die Abschnitte derart angeordnet sind, daß das Justierstück zu dem Anschlußstutzen frei in axialer Richtung verschiebbar ist und daß durch eine radiale Relativdrehung zwischen dem Justierstück und dem Anschlußstutzen die Rippen der Abschnitte formschlüssig ineinandergreifen, weil somit auf einfache und kostengünstige Weise die Koppeleinrichtung formschlüssig ohne zusätzlichen Kraftaufwand in axialer Richtung auf das durch die Verstelleinrichtung in Leerlaufstellung vorgegebene Maß einstellbar ist.

In diesem Zusammenhang ist es weiterhin vorteilhaft, daß die sich jeweils gegenüberliegenden und voneinander weg weisenden Rippen, sowohl bei dem Anschlußstutzen als auch bei dem Justierstück, in axialer Richtung um einen vorgegebenen Betrag der insbesondere dem halben Rippenabstand entspricht, zueinander versetzt angeordnet sind, weil auf diese Weise eine feinere genauere Justage erreicht wird, die insbesondere den kleinsteinstellbaren Abstand halbiert oder aber bei einem leicht fertigbaren größeren Abstand der Rippen, wodurch die Herstellungskosten herabgesetzt werden, eine feinere oder gleichgenaue Justage möglich ist.

Dadurch, daß die Rippen des Justierstücks oder des Anschlußstutzens mindestens eine in axialer Richtung durchlaufende Nut aufweisen, daß die Rippen des Justierstücks oder des Anschlußstutzens mindestens eine sich über einige der ersten Rippen in axialer Richtung erstreckende Wulst aufweisen und daß die Breite der Wulst der Breite der Nut im wesentlichen entspricht, ergibt sich der Vorteil, daß auf einfache und kostengünstige Weise eine Festsetzung des Justierstücks zu dem Anschlußstutzen erreicht wird, die ein ungewolltes Verdrehen und Entkoppeln verhindert, wodurch die Sicherheit bei dem Betrieb des Geschwindigkeitsreglers erhöht wird.

Dadurch, daß die Koppelstange das Justierstück und der Anschlußstutzen aus Kunststoff gespritzt sind, ergibt sich der Vorteil, daß die Herstellung dieser Bauteile einfach und kostengünstig ist.

Ein Ausführungsbeispiel des Erfindungsgegenstands ist in den Zeichnungen in unterschiedlichen Maßstäben dargestellt und wird im folgenden näher beschrieben.

Gleiche oder gleichwirkende Bauteile werden in den Zeichnungen mit gleichen Bezugszeichen versehen.

Es zeigen

Figur 1a eine erfindungsgemäße Koppeleinrichtung mit einem Stellantrieb als Schnitt,

Figur 1b eine erfindungsgemäße Koppeleinrichtung in einer Vorderansicht,

Figur 2a einen Anschlußstutzen der erfindungsgemäßen Koppeleinrichtung als Schnitt,

Figur 2b einen Anschlußstutzen in Vorderansicht,

Figur 2c eine Einzelheit Y, entsprechend Figur 2a,

Figur 2d eine Einzelheit Z, entsprechend Figur 2a,

Figur 2e eine Einzelheit X, entsprechend Figur 2b,

Figur 3a ein Justierstück der erfindungsgemäßen Koppeleinrichtung als Schnitt,

Figur 3b ein Justierstück in Vorderansicht,

Figur 3c einen Schnitt A-A entsprechend Figur 3b,

Figur 3d einen Schnitt B-B entsprechend Figur 3b,

Figur 3e eine Seitenansicht des erfindungsgemäßen Justierstücks,

Figur 4a eine Koppelstange des Erfindungsgegenstands in Unteransicht,

Figur 4b eine Koppelstange in einer Seitenansicht,

Figur 4c einen Schnitt C-C entsprechend Figur 4b.

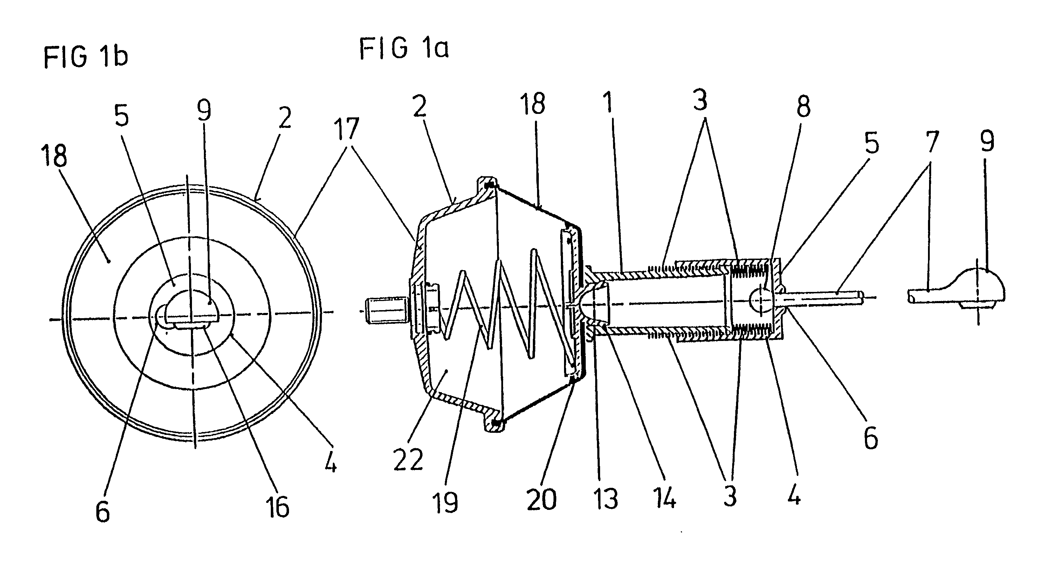

Figur 1a zeigt als Schnitt eine erfindungsgemäße Koppeleinrichtung für einen Geschwindigkeitsregler, die einen hier mit dargestellten Stellantrieb (2) an eine nicht dargestellte Verstelleinrichtung ankoppelt, die direkt oder indirekt mit einer Drosselklappe verbunden ist.

Figur 1b zeigt eine Vorderansicht des Erfindungsgegenstands.

Der Stellantrieb (2) ist hier um Kosten zu senken und den Aufbau einfach zu gestalten als pneumatisch betätigbares Stellelement ausgebildet, das fest mit einer Fahrzeugkarosserie verbunden ist und aus einem Grundkörper (17) der vorteilhaft aus Kunststoff gespritzt ist, einer mit dem Grundkörper (17) fest verbundenen Membrane (18), die an ihrer dem Grundkörper (17) abgewandten Seite eine Öffnung zur Aufnahme eines, insbesondere aus Kunststoff gespritzten, tellerförmigen Bauteils (20) aufweist, das die Membrane (18) abschließt und abdichtet. Zwischen dem Grundkörper (17) und dem Bauteil (20) ist zur Vorgabe einer Grundstellung des Stellantriebs (2) eine Feder (19) angeordnet, die bei Abschalten des Geschwindigkeitsreglers den Stellantrieb (2) in die Grundstellung zurückstellt. Der Grundkörper (17) weist zudem eine nicht dargestellte Öffnung auf, über die die Druckkammer (22) des Stellantriebs (2) mit einer Einrichtung zur Erzeugung von Unterdruck verbunden ist, die von einer Regelschaltung des Geschwindigkeitsreglers angesteuert wird.

In einem anderen Ausführungsbeispiel kann der Stellantrieb (2) auch ein elektrischer Antrieb sein.

Auf der dem Grundkörper (17) abgewandten Seite weist das Bauteil (20) ein federnd ausgelegtes Rastteil (14) auf.

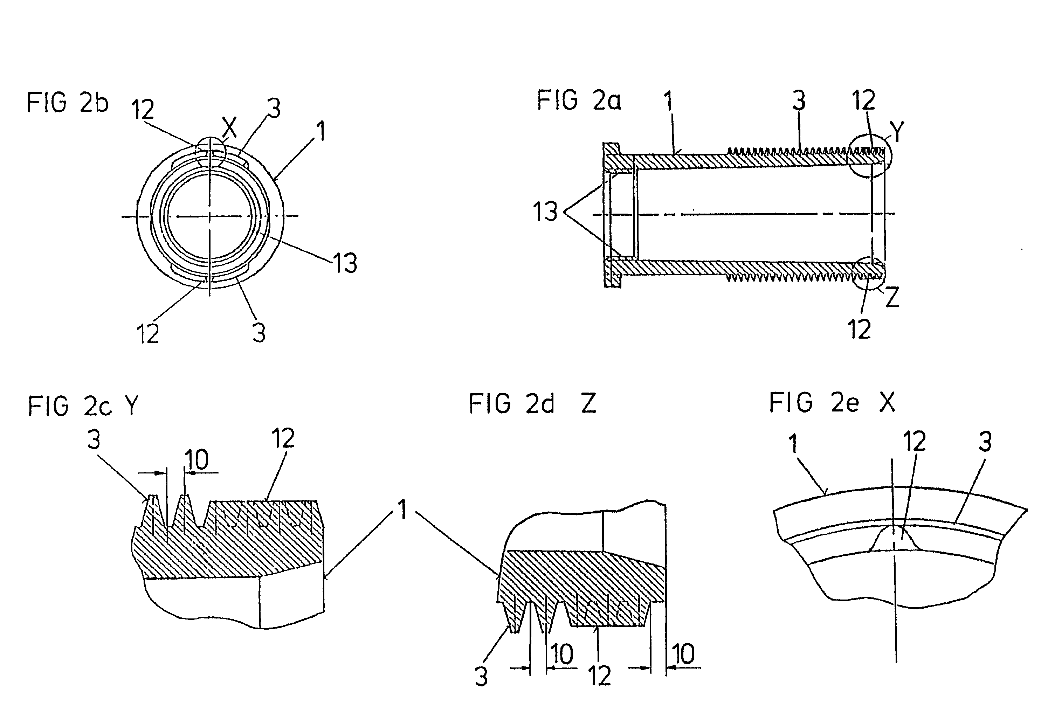

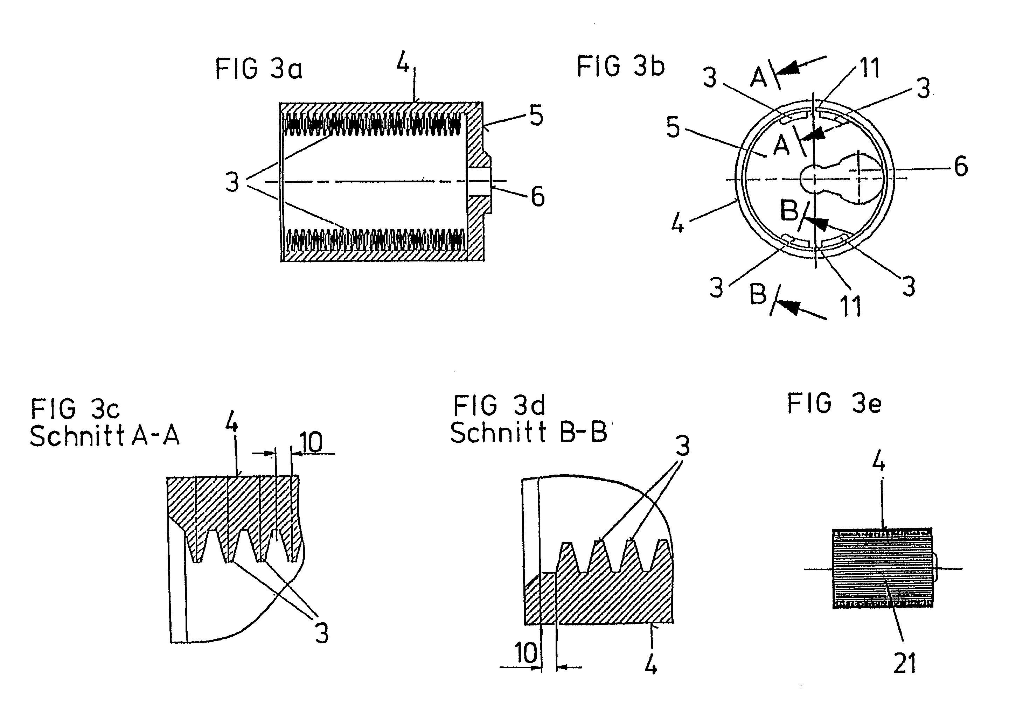

Der hohlzylinderförmige Anschlußstutzen (1) weist, wie in Figur 2a gezeigt, um die Montage zu vereinfachen, an seiner dem Stellantrieb zugewandten Seite an seiner Innenseite eine umlaufende Querschnittsverengung (13) auf, die mit dem Rastteil (14) des Bauteils (20) verrastet. Die Bemaßung der so gebildeten Rasteinrichtung ist derart ausgelegt, daß bei der Verrastung gleichzeitig die Membrane (18) zwischen dem Bauteil (20) und dem Anschlußstutzen (1) festgedrückt und die Druckkammer (22) gegen die Atmosphäre abgedichtet wird. Der Anschlußstutzen (1) weist, wie in Figur 2a und Figur 2b gezeigt, zur einfachen und schnellen Justage und schnellen Befestigung eines weiteren Bauteils auf seiner dem Stellantrieb (2) abgewandten Seite zwei an seiner Außenseite angeordnete voneinander weg weisende Abschnitte auf, die eine hier beispielhaft eingezeichnete Anzahl radial verlaufende sägezahnartig ausgebildetete Rippen (3) aufweisen, die sich über einen vorgegebenen Bereich parallel zueinander angeordnet in axialer Richtung erstrecken. Das an dem Anschlußstutzen (1) befestigbare Bauteil ist das Justierstück (4), welches in den Figuren 3a und 3b dargestellt ist und ebenfalls hohlzylinderförmig ausgebildet ist. Das Justierstück (4) verfügt über zwei sich gegenüberliegende auf der Innenseite des Justierstücks (4) angeordnete Abschnitte, die, um einen möglichst großen Verstellbereich zu erhalten, über die gesamte Länge der Innenseite angeordnete sägezahnartige Rippen (3) aufweisen, die in radialer Richtung verlaufen und sich in axialer Richtung erstreckend parallel zueinander angeordnet sind.

Der Abstand der Rippen (3) des Anschlußstutzens (1) stimmt im wesentlichen mit dem Abstand der Rippen (3) des Justierstücks (4) überein.

Die Abschnitte, die durch die Rippen (3) gebildet werden, sind dabei so angeordnet, daß in einer Stellung des Justierstücks (4) zu dem Anschlußstutzen (1) das Justierstück (4) frei in axialer Richtung über den Anschlußstutzen (1) verschiebbar ist, wodurch eine einfache kostengünstige und schnelle Längenanpassung der erfindungsgemäßen Koppeleinrichtung an eine vorgegebene Verstelleinrichtung in der Leerlaufstellung einer Drosselklappe erreicht wird.

Um eine axiale Festsetzung des Justierstücks (4) zu dem Anschlußstutzen (1) zu erreichen, bei der in der Leerlaufstellung der Drosselklappe die Verstelleinrichtung kraftschlüssig über die Koppeleinrichtung mit dem Stellantrieb (2) verbunden ist, erfolgt eine radiale Relativdrehung des Justierstücks (4) zu dem Anschlußstutzen (1), wodurch die Rippen (3) formschlüssig ineinandergreifen. Um eine engere feinere Justierung zu erreichen, sind die sich gegenüberliegenden Rippen (3) an dem Justierstück (4) in axialer Richtung um einen vorgegebenen Betrag (10), der hier etwa der Hälfte des Rippenabstands entspricht, zueinander versetzt angeordnet, wie Figur 3c und Figur 3d in vergrößertem Maßstab als Schnitt A-A und B-B zeigen. Auch die voneinander weg weisenden Rippen (3) des Anschlußstutzens (1) sind wie aus Figur 4c und Figur 4d zu entnehmen ist, um den Betrag (10), der etwa der Hälfte des Rippenabstands entspricht, zueinander in axialer Richtung versetzt angeordnet. Ist eine derart feine Justierung nicht erforderlich, kann mit dieser Anordnung der Rippenabstand vergrößert werden, was die Fertigung vereinfacht und die Kosten herabsetzt, ohne daß die Justagegenauigkeit zu gering wird.

Um die Justiereinrichtung festzusetzen, und gegen ein unbeabsichtigtes Verdrehen zu sichern, wodurch die Rippen (3) des Justierstücks (4) und des Anschlußstutzens (1) außer Formschluß geraten können, weisen die Rippen (3) des Justierstücks (4) eine in axialer Richtung verlaufende Nut (11) auf, die in Figur 3b dargestellt ist und weisen die ersten Rippen (3) des Anschlußstutzens (1) eine Wulst (12) auf, die niedriger ist, als die Rippen (3) und deren Breite im wesentlichen der Breite der Nut (11) entspricht. Die Wulst (12) verrastet in der Nut (11) und sichert somit das Justierstück (4) gegen ein ungewolltes Verdrehen. Die Ausbildung der Wulst (12) zeigen die Figuren 2a und 2b. Die Einzelheit X in Figur 2e zeigt die Wulst (12) in einer Vorderansicht in vergrößertem Maßstab. Die Einzelheit Y und die Einzelheit Z in den Figuren 2c und 2d zeigen die Wulst (12) jeweils im Schnitt in vergrößertem Maßstab. Die Wulst (12) erstreckt sich hier beispielhaft über die ersten drei bis vier Rippen (3). Durch die Anzahl der Rippen (3) über die sich die Wulst (12) erstreckt, ist die Rastkraft einstellbar. Die Rastkraft ist zudem durch die Höhe der Wulst (12) voreinstellbar, die niedriger, gleich oder größer als die Höhe der Rippen (3) sein kann.

In einer anderen Ausführungsform kann die Nut (11) auf dem Anschlußstutzen (1) und die Wulst (12) auf dem Justierstück (4) angeordnet sein. Die Rippen können auch über mehrere Nuten (11) und Wülste (12) verfügen.

Figur 3e zeigt das erfindungsgemäße Justierstück (4) in verkleinertem Maßstab. Das Justierstück (4) weist hier um das Justieren zu vereinfachen, auf dem gesamten Umfang der Außenfläche sich in axialer Richtung erstreckende Rillen auf, die ein radiales Verdrehen vereinfachen.

Wie aus Figur 1a und Figur 3a erkennbar ist, weist das Justierstück (4) an seiner dem Stellantrieb (2) abgewandten Seite einen Deckel (5) auf. Der Deckel (5) besteht hier, um eine einfache und kostengünstige Herstellung zu ermöglichen, zusammen mit dem Justierstück (4) aus einem Stück.

Der Deckel (5) weist zur Aufnahme der Koppelstange (7) einen Durchbruch (6) auf, in dessen einem Abschnitt die Koppelstange (7) gleitend gelagert ist.

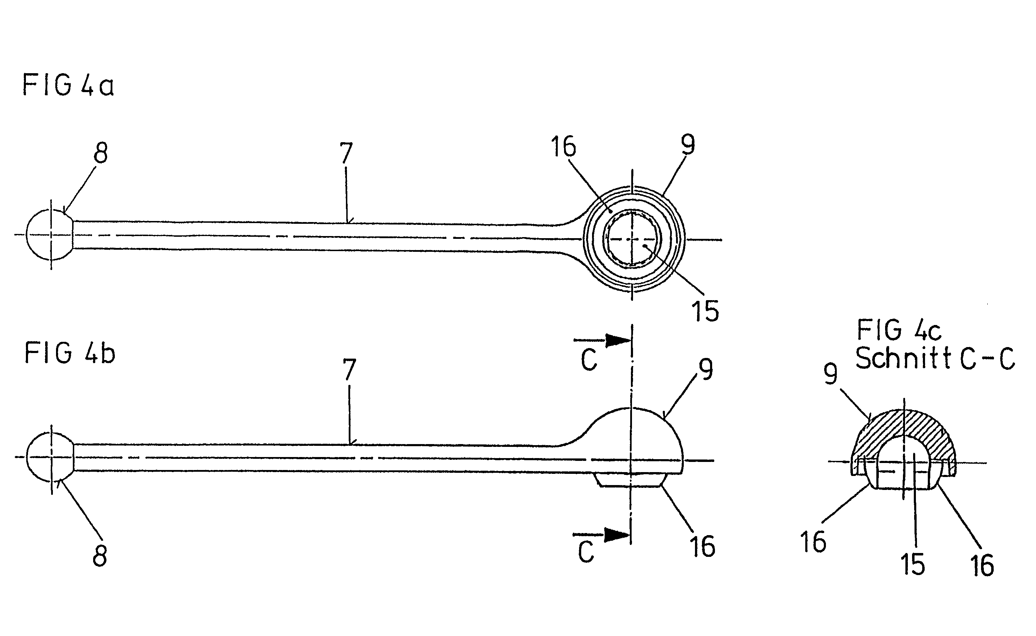

Figur 4a und Figur 4b zeigen die Koppelstange (7) in zwei unterschiedlichen Ansichten.

Die Koppelstange (7) weist an ihrem dem Stellantrieb (2) zugewandtem Ende eine Verdickung (8) auf, die einstückig angeformt ist. Die Verdickung (8) wird hier beispielhaft durch einen Kugelkopf gebildet. An der dem Stellantrieb (2) abgewandten Seite weist die Koppelstange (7) eine Anschlußeinrichtung (9) auf, die für eine einfache und kostengünstige Montage mit der Verstelleinrichtung verbindbar ist. Die Anschlußeinrichtung besteht für eine einfache Montage aus einer Kugelpfanne (15), die hier beispielhaft ein elastisches Rastteil (16) zur Aufnahme eines Kugelkopfes aufweist. In einem anderen Ausführungsbeispiel kann die Kugelpfanne (15) auch mehrere Rastteile (16) aufweisen.

Figur 4c zeigt als Schnitt C-C entsprechend Figur 4b die Kugelpfanne (15) und das Rastteil (16).

Figur 3b zeigt die Ausbildung des Durchbruchs (6) in dem Deckel (5) des Justierstücks (4), in dem die Koppelstange (7) gleitend gelagert ist.

Der Durchbruch (6) verfügt über einen ersten Abschnitt, dessen Durchmesser größer ist, als der Durchmesser der Verdickung (8) der Koppelstange (7) um die Koppelstange (7) durch den Durchbruch (6) des Deckels (5) in Richtung des Stellantriebs (2) hindurchstecken zu können.

Der Durchbruch (6) weist einen zweiten Abschnitt auf, der eine Verjüngung aufweist, die kleiner ist, als der Durchmesser der Koppelstange (7) und als Rastelement ausgebildet ist. Der dritte Abschnitt des Durchbruchs (6) ist in dem Deckel (5) des Justierstücks (4) mittig angeordnet und nimmt die eingerastete Koppelstange (7) gleitend lagernd auf.

Der Stellantrieb (2) des Geschwindigkeitsreglers ist somit immer dann an die Verstelleinrichtung angekoppelt, wenn die Verdickung (8) der Koppelstange (7) kraftschlüssig mit dem Durchbruch (6) in dem Deckel (5) des Justierstücks (4) verbunden ist.

Im folgendem wird die Funktion der erfindungsgemäßen Koppeleinrichtung kurz beschrieben.

Bei der Montage der Koppeleinrichtung wird der vormontierte Stellantrieb (2), der fest mit dem Anschlußstutzen (1) verbunden ist, an einem Teil der Fahrzeugkarosserie oder an dem Motorblock angebracht. Die Koppelstange (7) wird in dem Durchbruch (6) des Deckels (5) des Justierstücks (4) eingerastet. Dann wird das Justierstück (4) über den Anschlußstutzen (1) geschoben und die Koppelstange (7) über die Anschlußeinrichtung (9) mit der Verstelleinrichtung fest verbunden. Die Verstelleinrichtung ist auf die Leerlaufstellung der Drosselklappe federbelastet eingestellt. Zur Justierung der erfindungsgemäßen Koppeleinrichtung an die Verstelleinrichtung wird das Justierstück soweit axial über den Anschlußstutzen (1) geschoben bis die Verdickung (8) der Koppelstange (7) kraftschlüssig mit dem Deckel (5) des Justierstücks (4) verbunden ist. Dann wird das Justierstück (4) radial zu dem Anschlußstutzen (1) verdreht, so daß die Rippen (3) formschlüssig ineinandergreifen und die Wulst (12) in die Nut (11) einrastet. Auf diese einfache Weise ist die Koppeleinrichtung an das Maß anpaßbar, das durch die Verstelleinrichtung und die Toleranzen der Verstelleinrichtung vorgegeben ist.

Ist der Geschwindigkeitsregler außer Betrieb, so ist bei einer Betätigung des Gaspedalhebels die Koppelstange (7) frei in dem hohlzylinderförmigen Innenraum des Anschlußstutzens (1) und des Justierstücks (4) verschiebbar, ohne daß der Stellantrieb mit Kraft beaufschlagt wird.

Wird der Geschwindigkeitsregler eingeschaltet, wird je nach zu regelnder Fahrgeschwindigkeit die Druckkammer (22) des Stellantriebs (2) mit Unterdruck beaufschlagt, der die Koppelstange (7) in Richtung Stellantrieb (2) zieht. Die Koppelstange (7) wird dabei von der Verstelleinrichtung durch eine Feder mit Kraft in Richtung Leerlaufstellung der Drosselklappe beaufschlagt, so daß die Verdickung (8) jederzeit mit dem Justierstück (4) kraftschlüssig in Verbindung steht.

Erfordert z.B. eine Notsituation, daß das Fahrzeug beschleunigt werden muß, so ist die Koppelstange (7) frei in dem Durchbruch (6) verschiebbar, ohne daß der Stellantrieb (2) mit Kraft beaufschlagt wird.

Wird der Geschwindigkeitsregler abgeschaltet, so nimmt der Stellantrieb (2) bedingt durch die wirkende Kraft der Feder (19) wieder seine Grundstellung ein und die Fahrgeschwindigkeit kann in allen Bereichen durch die Gaspedalbewegung bestimmt werden.

Um eine einfache und kostengünstige Herstellung der Koppelstange (7), des Justierstücks (4) und des Anschlußstutzens (1) zu erreichen, werden diese Bauteile aus Kunststoff gespritzt. Diese Bauteile können aber auch aus anderen Materialien bestehen, wie z.B. Metall. Die Anschlußeinrichtung (9) kann in einem anderen Ausführungsbeispiel direkt oder indirekt an einer Drosselklappe angelenkt sein.

## Patentansprüche

1. Koppeleinrichtung für einen Geschwindigkeitsregler, insbesondere in Kraftfahrzeugen, mit relativ zueinander beweglichen Bauteilen (1, 4, 7), die kraftschlüssig miteinander koppelbar sind und die einen Stellantrieb (2) des Geschwindigkeitsreglers mit einer Verstelleinrichtung verbinden, die direkt oder indirekt mit einer Drosselklappe verbunden ist, dadurch gekennzeichnet, daß ein hohlzylinderförmiger Anschlußstutzen (1) fest mit dem Stellantrieb (2) verbunden ist, daß der Anschlußstutzen (1) auf der dem Stellantrieb (2) abgewandten Seite über eine Justiereinrichtung mit einem hohlzylinderförmigen Justierstück (4) verbunden ist, daß das Justierstück (4) auf der dem Stellantrieb (2) abgewandten Seite einen Deckel (5) mit einem Durchbruch (6) aufweist, in dessen einem Abschnitt eine Koppelstange (7) gleitend gelagert ist, daß die Koppelstange (7) an ihrer dem Stellantrieb (2) zugewandten Seite eine Verdickung (8) aufweist, die größer ist als der Abschnitt des Durchbruchs (6), in dem die Koppelstange (7) gelagert ist und daß die Koppelstange (7) an ihrer dem Stellantrieb (2) abgewandten Seite eine Anschlußeinrichtung (9) aufweist, die die Koppelstange (7) mit der Verstelleinrichtung verbindet.

2. Koppeleinrichtung nach Anspruch 1, dadurch gekennzeichnet, daß die Justiereinrichtung durch sich gegenüberliegende Abschnitte auf der Innenseite und durch voneinander weg weisende Abschnitte auf der Außenseite des Anschlußstutzens (1) und des Justierstücks (4) gebildet wird, daß die Abschnitte radial verlaufende sägezahnartig ausgebildete Rippen (3) aufweisen, die sich über einen vorgegebenen Bereich parallel zueinander in axialer Richtung erstrecken, daß die Abschnitte derart angeordnet sind, daß das Justierstück (4) zu dem Anschlußstutzen (1) frei in axialer Richtung verschiebbar ist und daß durch eine radiale Relativdrehung zwischen dem Justierstück (4) und dem Anschlußstutzen (1) die Rippen (3) der Abschnitte formschlüssig ineinandergreifen.

3. Koppeleinrichtung nach Anspruch 2, dadurch gekennzeichnet, daß die sich jeweils gegenüberliegenden und voneinander weg weisenden Rippen (3) sowohl bei dem Anschlußstutzen (1) als auch bei dem Justierstück (4) in axialer Richtung um einen vorgegebenen Betrag (10), der insbesondere dem halben Rippenabstand entspricht, zueinander versetzt angeordnet sind.

4. Koppeleinrichtung nach Anspruch 2, dadurch gekennzeichnet, daß die Rippen (3) des Justierstücks (4) oder des Anschlußstutzens (1) mindestens eine in axialer Richtung durchlaufende Nut (11) aufweisen, daß die Rippen (3) des Justierstücks (4) oder des Anschlußstutzens (1) mindestens eine sich über einige der ersten Rippen in axialer Richtung erstreckende Wulst (12) aufweisen und daß die Breite der Wulst (12) der Breite der Nut (11) im wesentlichen entspricht.

5. Koppeleinrichtung nach Anspruch 1, dadurch gekennzeichnet, daß der Stellantrieb (2) fest mit einer Fahrzeugkarosserie oder einem Motorblock verbunden ist.

6. Koppeleinrichtung nach Anspruch 1, dadurch gekennzeichnet, daß der Anschlußstutzen (1) über eine Rasteinrichtung mit dem Stellantrieb (2) verbunden ist, die durch eine umlaufende Querschnittsverengung (13) an der Innenseite des Anschlußstutzens (1) und einem federnd ausgelegten Rastteil (14) an dem Stellantrieb (2) gebildet wird.

7. Koppeleinrichtung nach Anspruch 1, dadurch gekennzeichnet, daß der Durchbruch (6) eine schlüssellochförmige Ausbildung aufweist, deren erster Abschnitt einen größeren Durchmesser aufweist als die Verdickung (8) der Koppelstange (7), daß ein zweiter Abschnitt des Durchbruchs (6) eine Verjüngung aufweist, die kleiner ist, als der Durchmesser der Koppelstange (7) und daß ein dritter Abschnitt des Durchbruchs (6), in dem die Koppelstange (7) einrastbar und gleitend gelagert ist, mittig in dem Deckel (5) angeordnet ist.

8. Koppeleinrichtung nach Anspruch 1, dadurch gekennzeichnet, daß die Verdickung (8) durch einen Kugelkopf gebildet wird.

9. Koppeleinrichtung nach Anspruch 1, dadurch gekennzeichnet, daß die Anschlußeinrichtung (9) eine Kugelpfanne (15) aufweist, die über elastische Rastteile (16) verfügt.

10. Koppeleinrichtung nach Anspruch 1, dadurch gekennzeichnet, daß die Anschlußeinrichtung (9) an einem Gaspedalhebel angelenkt ist, der Teil der Verstelleinrichtung ist.

11. Koppeleinrichtung nach Anspruch 1, dadurch gekennzeichnet, daß der Stellantrieb (2) ein pneumatisch betätigbares Stellelement ist, das einen Grundkörper (17), eine Membrane (18), eine Feder (19) und ein die Membrane (18) abschließendes tellerförmiges Bauteil (20) aufweist.

12. Koppeleinrichtung nach Anspruch 1, dadurch gekennzeichnet, daß die Koppelstange (7), das Justierstück (4) und der Anschlußstutzen (1) aus Kunststoff gespritzt sind.

13. Koppeleinrichtung nach Anspruch 1, dadurch gekennzeichnet, daß das Justierstück (4) und der Deckel (5) aus einem Stück bestehen.

14. Koppeleinrichtung nach Anspruch 6 und Anspruch 11, dadurch gekennzeichnet, daß der Anschlußstutzen (1) die Membrane (18) des Stellantriebs (2) über die Rasteinrichtung an das tellerförmige Bauteil (20) anpreßt.

15. Koppeleinrichtung nach Anspruch 1, dadurch gekennzeichnet, daß der Stellantrieb (2) elektrisch betätigbar ist.

## Claims

1. Coupling device for a speed governor, especially in motor vehicles, with components (1, 4, 7) which can move relative to one another, can be coupled nonpositively to one another and connect an actuator (2) of the speed governor to a repositioning device which is connected directly or indirectly to a throttle valve, characterised in that a connection piece (1) having the form of a hollow cylinder is firmly connected to the actuator (2), in that the connection piece (1) is connected on the side facing away from the actuator (2), via an adjusting device, to an adjusting piece (4) having the form of a hollow cylinder, in that, on the side facing away from the actuator (2), the adjusting piece (4) has a cover (5) with an opening (6), in one portion of which a coupling rod (7) is slidingly supported, in that, on its side facing the actuator (2), the coupling rod (7) has a thickened portion (8) which is larger than that portion of the opening (6) in which the coupling rod (7) is supported and in that, on its side facing away from the actuator (2), the coupling rod (7) has a connection device (9) which connects the coupling rod (7) to the repositioning device.

2. Coupling device according to Claim 1, characterised in that the adjusting device is formed by mutually opposite portions on the inside and portions facing away from one another on the outside of the connection piece (1) and of the adjusting piece (4), in that the portions have radially extending ribs (3) of sawtooth-like design which extend parallel to one another in the axial direction over a predetermined region, in that the portions are arranged in such a way that the adjusting piece (4) can be displaced freely in the axial direction relative to the connection piece (1) and in that the ribs (3) of the portions engage in one another positively by means of a radial relative rotation between the adjusting piece (4) and the connection piece (1).

3. Coupling device according to Claim 2, characterised in that, both in the case of the connection piece (1) and in the case of the adjusting piece (4), the mutually opposite ribs (3) and those which face away from one another are offset relative to one another in the axial direction by a predetermined amount (10), in particular an amount which corresponds to half the rib spacing.

4. Coupling device according to Claim 2, characterised in that the ribs (3) of the adjusting piece (4) or of the connection piece (1) have at least one groove (11) passing through in the axial direction, in that the ribs (3) of the adjusting piece (4) or of the connection piece (1) have at least one bead (12) extending over some of the first ribs in the axial direction and in that the width of the bead (12) corresponds essentially to the width of the groove (11).

5. Coupling device according to Claim 1, characterised in that the actuator (2) is firmly connected to a vehicle body or an engine block.

6. Coupling device according to Claim 1, characterised in that the connection piece (1) is connected to the actuator (2) via a snap-in device which is formed by a circumferential narrowing (13) of the cross-section on the inside of the connection piece (1) and a snap-in part (14) of resilient design on the actuator (2).

7. Coupling device according to Claim 1, characterised in that the opening (6) has a keyhole-shaped formation, the first portion of which has a larger diameter than the thickened portion (8) of the coupling rod (7), in that a second portion of the opening (6) has a taper which is smaller than the diameter of the coupling rod (7) and in that a third portion of the opening (6), in which the coupling rod (7) can be snapped in and is slidingly supported, is arranged centrally in the cover (5).

8. Coupling device according to Claim 1, characterised in that the thickened portion (8) is formed by a spherical head.

9. Coupling device according to Claim 1, characterised in that the connection device (9) has a ball socket (15) which has flexible snap-in parts (16).

10. Coupling device according to Claim 1, characterised in that the connection device (9) is articulated on an accelerator pedal lever which is part of the repositioning device.

11. Coupling device according to Claim 1, characterised in that the actuator (2) is a pneumatically actuable actuating element which has a basic body (17), a diaphragm (18), a spring (19) and a dish-shaped component (20) closing off the diaphragm (18).

12. Coupling device according to Claim 1, characterised in that the coupling rod (7), the adjusting piece (4) and the connection piece (1) are injection-moulded from plastic.

13. Coupling device according to Claim 1, characterised in that the adjusting piece (4) and the cover (5) are of one piece.

14. Coupling device according to Claim 6 and Claim 11, characterised in that the connection piece (1) presses the diaphragm (18) of the actuator (2) against the dish-shaped component (20) via the snap-in device.

15. Coupling device according to Claim 1, characterised in that the actuator (2) is electrically actuable.

**Revendications**

1. Dispositif d'accouplement pour un régulateur de vitesse, notamment dans des véhicules automobiles, comportant des composants mobiles les uns par rapport aux autres (1, 4, 7), qui peuvent être mutuellement couplés par serrage ou frottement et qui relient un servo-actionneur (2) du régulateur de vitesse à un dispositif positionneur lié, directement ou indirectement, à un papillon d'étranglement, caractérisé par le fait qu'une tubulure de raccordement cylindrique creuse (1) est solidarisée au servo-actionneur (2), par le fait qu'en son côté non tourné vers le servo-actionneur (2) la tubulure de raccordement (1) est reliée, par l'intermédiaire d'un dispositif d'ajustement à une pièce d'ajustement cylindrique creuse (4), par le fait que la pièce d'ajustement (4) présente, du côté non en regard du servo-actionneur (2), un couvercle (5) ayant un ajour (6) dans une première portion duquel une tige d'accouplement (7) trouve une portée de glissement, par le fait que la tige d'accouplement (7) présente, en son côté tourné vers le servo-actionneur (2), un épaississement (8) qui est plus grand que la portion de l'ajour (6) dans lequel la tige d'accouplement (7) trouve une portée, et par le fait que la tige d'accouplement (7) présente, en son côté éloigné du servo-actionneur (2), un dispositif de raccordement (9) qui relie la tige d'accouplement (7) au dispositif positionneur.

2. Dispositif d'accouplement selon revendication 1, caractérisé par le fait que le dispositif d'ajustement est constitué par des portions en vis-à-vis sur le côté intérieur et par des portions dirigées dans des sens opposés, sur le côté extérieur de la tubulure de raccordement (1) et de la pièce d'ajustement (4), par le fait que les portions présentent des nervures (3) dirigées radialement, ayant une configuration de dents de scie, lesquelles, sur un domaine prédéterminé, s'étendent parallèlement les unes aux autres, en direction axiale, par le fait que les portions sont disposées de manière que la pièce d'ajustement (4) puisse être déplacée librement en direction axiale, par rapport à la tubulure de raccordement (1), et par le fait qu'un mouvement radial de rotation relative entre la pièce d'ajustement (4) et la tubulure de raccordement (1) a pour effet que les nervures (3) desdites portions viennent mutuellement en prise par conjugaison de formes.

3. Dispositif d'accouplement selon revendication 2, caractérisé par le fait que les nervures (3) en vis-à-vis et celles se tournant le dos sont disposées avec un décalage mutuel en direction axiale, ce décalage ayant une valeur (10) prédéterminée qui correspond notamment à la moitié de l'intervalle entre nervures, cela aussi bien pour les nervures de la tubulure de raccordement (1) que pour celles de la pièce d'ajustement (4).

4. Dispositif d'accouplement selon revendication 2, caractérisé par le fait que les nervures (3) de la pièce d'ajustement (1) ou de la tubulure de raccordement (1) présentent au moins une rainure (11) traversante en direction axiale, par le fait que les nervures (3) de la pièce d'ajustement (4) ou de la tubulure de raccordement (1) présentent au moins un bourrelet (12) s'étendant en direction axiale, sur quelques unes des premières nervures, et par le fait que la largeur du bourrelet (12) correspond sensiblement à la largeur de la rainure (11).

5. Dispositif d'accouplement selon revendication 1, caractérisé par le fait que le servo-actionneur (2) est solidarisé à une carrosserie de véhicule automobile ou à un bloc-moteur.

6. Dispositif d'accouplement selon revendication 1, caractérisé par le fait que la tubulure de raccordement (1) est reliée au servo-actionneur (2) par un dispositif de verrouillage par enclenchement qui est constitué par un rétrécissement de section droite circonférentiel (13) sur le côté intérieur de la tubulure de raccordement (1) et par une partie verrouillable par enclenchement (14), conçue pour être élastique, sur le servo-actionneur (2).

7. Dispositif d'accouplement selon revendication 1, caractérisé par le fait que l'ajour (6) présente une configuration en forme de trou de clé dont la première portion présente un diamètre plus grand que l'épaississement (8) de la tige d'accouplement (7), par le fait qu'une deuxième portion de l'ajour (6) présente un rétrécissement qui est plus petit que le diamètre de la tige d'accouplement (7), et par le fait qu'une troisième portion de l'ajour (6) dans lequel la tige d'accouplement (7) peut être enclenchée et peut trouver une portée de glissement est disposée centralement dans le couvercle (5).

8. Dispositif d'accouplement selon revendication 1, caractérisé par le fait que l'épaississement (8) est constitué par une tête sphérique.

9. Dispositif d'accouplement selon revendication 1, caractérisé par le fait que le dispositif de raccordement (9) présente une cuvette sphérique (15) qui dispose de parties élastiques (16) aptes au verrouillage par enclenchement.

10. Dispositif d'accouplement selon revendication 1, caractérisé par le fait que le dispositif de raccordement (9) est articulé sur un levier de pédale d'accélérateur, lequel fait partie du dispositif positionneur.

11. Dispositif d'accouplement selon revendication 1, caractérisé par le fait que le servo-actionneur (2) est un élément positionneur actionnable pneumatiquement qui présente un corps de base (17), une membrane (18), un ressort (19) et un composant (20) en forme de cuvette terminant et fermant la membrane (18).

12. Dispositif d'accouplement selon revendication 1, caractérisé par le fait que la tige d'accouplement (7), la pièce d'ajusteuent (4) et la tubulure de raccordement (1) sont moulées par injection de matière plastique.

13. Dispositif d'accouplement selon revendication 1, caractérisé par le fait que la pièce d'ajustement (4) et le couvercle (5) sont d'un seul tenant.

14. Dispositif d'accouplement selon revendication 6 et revendication 11, caractérisé par le fait que la tubulure de raccordement (1) appuie la membrane (18) du servo-actionneur (2) contre le composant en forme de cuvette (20) du moyen du dispositif de verrouillage par enclenchement sur le composant en forme de cuvette (20).

15. Dispositif d'accouplement selon revendication 1, caractérisé par le fait que le servo-actionneur (2) est actionnable électriquement.

FIG 1a

FIG 1b

FIG 2a

FIG 2b

FIG 2c Y

FIG 2d Z

FIG 2e X

FIG 3a

FIG 3b

FIG 3c
Schnitt A-A

FIG 3d
Schnitt B-B

FIG 3e

FIG 4a

8    7    16    9

15

FIG 4b

7

8

C

C

9

16

FIG 4c
Schnitt C-C

9

16    15    16

EP 0 344 432 B1